Europäisches Patentamt

European Patent Office

Office européen des brevets

(19)

(11) Publication number: **0 124 972**
**B1**

(12) **EUROPEAN PATENT SPECIFICATION**

(45) Date of publication of patent specification: **19.07.89**    (51) Int. Cl.⁴: **C 09 K 5/06**

(21) Application number: **84301677.5**

(22) Date of filing: **13.03.84**

(54) Polymeric composite heat storage material.

(30) Priority: **14.03.83 US 475077**
**14.03.83 US 475076**

(43) Date of publication of application:
**14.11.84 Bulletin 84/46**

(45) Publication of the grant of the patent:
**19.07.89 Bulletin 89/29**

(84) Designated Contracting States:
**DE FR GB IT**

(56) References cited:
**FR-A-2 376 893**
**GB-A-1 312 900**
**US-A-4 111 189**
**US-A-4 253 983**

(73) Proprietor: **E.I. DU PONT DE NEMOURS AND COMPANY**
**1007 Market Street**
**Wilmington Delaware 19898 (US)**

(72) Inventor: **Anderson, Albert Gordon**
**2410 St. Francis Street**
**Wilmington Delaware 19808 (US)**
Inventor: **Howard, Edward George, Jr.**
**R. D. No. 2, Box 100**
**Hockessin, Delaware 19707 (US)**

(74) Representative: **Jones, Alan John et al**
**CARPMAELS & RANSFORD 43 Bloomsbury Square**
**London, WC1A 2RA (GB)**

Courier Press, Leamington Spa, England.

# EP 0 124 972 B1

**Description**

## Background of the invention
### Field of the invention

This invention relates to composites which are useful as heat storage materials and which are comprised of an organic latent heat storage material and either a filled ethylene polymer or a finely divided solid and an alkene polymer.

### Background

As fossil fuels become scarce and more expensive, the use of alternate energy sources, such as solar energy and waste energy from industrial processes, becomes more attractive. Since the time periods during which such sources of energy are available do not necessarily correspond to the time periods of energy need, energy storage plays an important role in the use of alternate energy sources.

Various types of heat storage are known. For example, heat can be stored in the form of the sensible heat of a fluid such as water or the sensible heat of a solid such as stone or in the form of a combination of sensible heat and latent heat of a transition, particularly the latent heat of fusion, using materials such as inorganic salt hydrates, paraffin or organic polymers. The transition temperature of the latent heat material used must be below the temperature of the material from which heat is to be removed and stored, and equal to or above the temperature which is to be provided on removal of heat from the latent heat material.

Latent heat materials undergoing liquid/solid phase transitions must be suitably contained. One way to accomplish this to to place the latent heat storage material in a container of suitable size, making allowance for temperature expansion of the latent heat material. This approach using a container may give rise to a heat transfer problem when the heat is removed from the latent heat storage material. Solidification of the latent heat storage material occurs first on the walls of the container, and any additional heat removed must be conducted through the solid thus formed, the solid increasing in thickness as more of the liquid solidifies. Conversely, when heat is being stored in a solid latent heat material, heat transfer is inefficient because convection, which is requisite to efficient heat transfer, is hindered by the high viscosity of the liquid first formed from melted solid. Moreover, on cycling, the solid latent heat storage material may contrast and pull away from the walls of the container, thereby further decreasing the efficiency of heat conduction.

The art discloses attempts which have been made to solve some of these problems. For example, a granular form of latent heat material may be used, with the heat transfer medium being passed through a bed of such granules either to supply heat or to extract heat from the granules.

U.S. Patent 2,846,421 discloses a method for controlling the temperature of liquid phase reactions, for example, emulsion polymerization, by means of an encapsulated latent heat material, the capsule being formed from a metal or plastic, the latent heat material being commonly available materials, including water, benzene, glycol, mercury, Glauber's salt and Wood's metal. U.S. Patent 4,182,398 discloses a method for removing heat from a fluid by means of crystalline polyethylene silane-grafted-crosslinked polymer pieces crosslinked to retain at least 70% of the heat of fusion of the uncrosslinked crystalline polymer and sufficiently crosslinked for the pieces not to stick together upon being cycled above and below the melting point of the polymer. U.S. Patent 4,221,259 discloses a method for storing heat by means of a fusible substance, that is, a latent heat material, which is absorbed on a finely divided microporous carrier. Paraffin absorbed on active coal or coke in grains or sticks is exemplified. Other latent heat materials which are disclosed are fusible mineral salts, metal hydrides, alloys, metal alloys and polymers. U.S. Patent 4,003,426 discloses a heat or thermal energy storage structure comprising a crosslinked polymeric resinous matrix having a plurality of substantially unconnected small closed cavities and a heat sink material encapsulated within the cavities. A similar type of heat storage composition is disclosed in U.K. Patent Application GB 2086032A.

It is an object of this invention to provide a composite material which is suitable for heat storage. Another object is to provide such a material which can be cycled repeatedly between heat sink and heat source conditions without substantial deterioration. Still another object is to provide such a material which can be fabricated readily from commonly available ingredients. Other objects will become apparent hereinafter.

### Disclosure of invention

For further comprehension of the invention and of the objects and advantages thereof, reference may be made to the following description and to the appended claims in which the various novel features of the invention are more particularly set forth.

The invention resides in a composite consisting essentially of, by weight, with the total being 100%:

(a) about 30—55%, preferably 30—40%, more preferably about 35%, of an organic latent heat material having at least one latent heat transition, as a solid-solid transition(s) and/or a solid-liquid transition, in the temperature range 0—100°C, and which, when liquid, wets the surface of either the filled ethylene polymer (h)(i) or the finely divided (particulate) solid and polyalkene of (b)(ii); and

(b) about 45—70%, preferably 60—70%, more preferably about 65%, of either:

(i) a filled ethylene polymer consisting of ethylene polymer and finely divided (particulate) solid filler,

2

EP 0 124 972 B1

substantially all of the ethylene polymer being deposited on the surface of the finely divided filler and substantially all of the filler having ethylene polymer deposited on its surface, or

(ii) a polyalkene having a weight average molecular weight of at least 10,000 and a finely divided (particulate) solid such as a mineral, an organic material such as a polymer, a metal or a mixture thereof, said solid having a melting point above and being substantially insoluble in the organic latent heat material of (a) and the polyalkene, the polyalkene being at least 5% by weight and the finely divided (particulate) solid being at least 15% by weight of the combined weights of organic latent heat material, polyalkene and finely divided (particulate) solid.

In a more preferred embodiment of the invention the filled ethylene polymer (b)(i) consists essentially of, by weight:

(a) about 10—70%, preferably about 20—55%, of an ethylene polymer having an $\eta_{inh}$ of at least about 1, preferably at least about 2, more preferably at least about 4, most preferably at least about 8, and selected from polyethylene and copolymers of ethylene and up to about 15%, by weight, of one or more polymerizable olefinic hydrocarbons of 3—10 carbon atoms; and

(b) about 30—80%, preferably about 45—80%, of a finely divided (particulate) solid filler, substantially all of the ethylene polymer being deposited on the surface of the finely divided filler and substantially all of the filler having ethylene polymer deposited on its surface.

In a still more preferred embodiment of the invention the filler for the filled ethylene polymer (b)(i) is selected from:

(a) an inorganic compound having a neutral to acidic surface and having interacted at its surface sufficient catalytically active transition metal compound substantially free of halogen bonded to transition metal to provide 0.000001—1.7 milligram-atom of transition metal per gram of filler;

(b) an acrylic polymer selected from polyacrylonitrile and copolymers of acrylonitrile and not more than about 15%, by weight, of one or more polymerizable ethylenically unsaturated comonomers; and

(c) conductive carbon.

In another preferred embodiment the composite consists essentially of about 5—65%, more preferably 15—25% of polyalkene, more preferably having a molecular weight of at least 100.000, and about 15—90%, more preferably 35—55%, of finely divided (particulate) solid.

The term "consisting essentially of" is used to specify the essential components of the composite of the invention; the term is not intended to preclude the inclusion of other components which do not substantially adversely affect the desirable properties of the composite of the invention, such other components thus being nonessential components of the composite.

The organic latent heat compounds which are useful in this invention have a latent heat transition(s), as a solid-solid transition(s) and/or a solid-liquid transition, singly or in combination, in the temperature range 0—100°C. The preferred organic compounds have the highest latent heat capacity per gram when compared to their isomers, Thus, organic comopunds having unbranched saturated chains are preferred over organic compounds having branched chains, rings or unsaturated linkages. In addition, since it is necessary that the organic compounds be compatible with the filled ethylene polymer or the alkene polymer and solid filler, they are restricted to those organic compounds that possess a minimum of polar groups and, when molten, will wet the surface of the filled ethylene polymer or the alkene polymer and solid filler. In order for the liquid organic compound to wet the surface of the filled ethylene polymer or alkene polymer and filler it must have a lower refractive index than that of the filled ethylene polymer or those of the alkene polymer and the filler. It is also desirable that the organic compounds have a low vapor pressure in the working temperature range, that is, in the cycling temperature range as a heat sink and as a heat source, be nontoxic, possess little odor, and be thermally stable for a period of years. Latent heat materials having a latent heat of fusion are preferred. Preferred organic latent heat materials are alkanes and alkanoic acids. Especially preferred are paraffin wax and stearic acid.

The finely divided solid used in conjunction with the polyalkene can be a finaly divided (particulate) mineral, polymer, or metal or a combination of these. Carbon is considered herein as a mineral. The size of the particles or agglomerates of particles is in the range of 1 μm to 2 mm, passing a 10 mesh sieve (U.S. Sieve Series).

The filled ethylene polymer comprises well known materials and can be prepared, using known techniques, by polymerizing the monomer(s) in the presence of the filler. Details of the preparation of filled ethylene polymers comprised of ethylene polymer and inorganic compounds can be found in U.S. Patents 4,097,447 and 4,187,210; of filled ethylene polymers comprised of ethylene polymer and acrylic polymers, in U.S. Patent 4,126,647; and of filled ethylene polymers comprised of ethylene polymer and conductive carbon, in U.S. Patent 4,151,126.

Following is a description of a known process, from U.S. Patent 4,187,210, for producing a filled ethylene polymer. This process comprises:

(A) dehydrating finely-divided aluminum silicate clay selected from the group consisting of kaolinite, attapulgite, and fuller's earth, and containing at least about 0.05% by weight of titania, said clay having a weight-average equivalent spherical particle diameter of less than about 50 μm, and being free of promotion with added transition metal coordination catalyst component, by heating at a temperature of about 400° to about 1400°C to reduce the water content to less than one mole of water per mole of aluminum silicate:

(B) dispersing

(1) at least about 1 weight/volume percent of finely-divided inorganic filler compound, said filler being

(a) about 70 to about 100% by weight of said dehydrated aluminum silicate clay, and

(b) 0 to about 30% by weight of pigmentary oxide selected from the group consisting of titania, zinc oxide, antimony trioxide and mixtures thereof, said pigmentary oxide having a weight-average equivalent spherical particle diameter less than that of the clay, and

(2) about 0.001 to about 1.0 millimole, per gram of filler, of organoaluminum compound selected from the group consisting of trialkylaluminums, dialkylaluminum hydrides, dialkylaluminum alkoxides, alkylaluminum halides and polymeric hydrocarbylaluminums in which the alkyl groups, alike or different, have 1 to 10 carbons each, in an inert, liquid hydrocarbon diluent;

(C) contacting the resulting dispersion with olefin selected from the group consisting of ethylene and mixtures of ethylene with one or more 1-alkenes of 3 to 10 carbon atoms with agitation at a temperature of about 0 to about 250°C and a pressure from about atmospheric to about 500 atmospheres until a composite containing about 10 to about 70% by weight, based on the polyolefin and filler, of polyolefin selected from the group consisting of polyethylene and copolymers of ethylene containing up to about 15% by weight of units derived from one or more 1-alkenes of 3 to 10 carbons having an inherent viscosity of at least about 1 is formed; and

(D) isolating the resulting polyolefin/filler (filled ethylene polymer) as a free-flowing powder.

The filled ethylene polymers which are useful in this invention are such that substantially all of the ethylene polymer is deposited on the surface of the filler and substantially all of the filler has ethylene polymer deposited on its surface. By the term "substantially all" is meant that the amount of filler-free ethylene polymer and the amount of ethylene polymer-free filler are insufficient to materially alter or adversely effect the physical characteristics of the filled ethylene polymers. In other words, "substantially all" excludes both filler-free ethylene polymer and ethylene polymer-free filler in such amounts which prevent the advantages of the invention from being realized.

Although the amount of ethylene polymer in the filled ethylene polymer commonly is 10—70%, preferably 20—55%, the specific amount will depend on the density, nature and particle size of the filler. With larger particle sizes and higher particle densities, less ethylene polymer is needed.

The ethylene polymers which are useful in this invention are polyethylene and copolymers of ethylene containing up to about 15%, by weight, of polymer repeat units of one or more polymerizable olefinic hydrocarbons of 3 to 10 carbon atoms. Suitable comonomers include propylene 1-butene, 1-pentene, 3-methyl-1-butene, 4-methyl-1-pentene, 1-hexene, 1-octene, 1-decene, norbornene and mixtures thereof. Other comonomers include those which are reactive in known coordination polymerization reactions, for example, linear nonconjugated diolefins, such as 1,4-hexadiene, 1,6-octadiene, dicyclopentadiene and norbornene derivatives, such as ethyldenenorbornene. The preferred filled ethylene polymer is based on polyethylene.

The ethylene polymers which are useful in the filled ethylene polymer are solids of high molecular weight, that is, they have an inherent viscosity ($\eta_{inh}$) of at least about 1 in order for the composites to exhibit their unusual combination of physical properties. For optimum physical properties of the composite, the ethylene polymer should preferably have an inherent viscosity of at least about 2, more preferably at least about 4, and most preferably at least about 8.

The term "inherent viscosity", as used herein, refers to inherent viscosities determined by the standard procedure outlined below. A sample of the composite powder calculated to contain 0.025 g of polyolefin is placed in a closed flask containing a magnetic stirring bar and adapted for insertion of a thermometer and a condenser containing a nitrogen purge tube. Into this flask is pipetted 50 mL of 1,2,4-trichlorobenzene containing 1.33 g/L of butylated hydroxytoluene antioxidant to give a 0.05 weight/volume percent solution of polyolefin.

With the thermometer and condenser in place, nitrogen is slowly passed over the contents of the flask, the magnetic stirrer is started, and the contents of the flask are heated to 180°C. The solution is stirred at this temperature for 2 hours. At the completion of this time, the condenser unit and the thermometer are removed from the flask. A ground glass stopper is inserted into the thermometer well, a tube to support a capillary viscometer is inserted in the condenser-well, and the entire unit is transferred to an oil bath and maintained at 130°C. A capillary viscometer having three scratch marks, one near the bottom, one above the bulb and one below the bulb is inserted into the support tube.

After 1 hour at 130°C in the oil bath, the viscometer is adjusted so that the tip is immersed in the solution to the depth indicated by the bottom scratch. Vacuum is gently applied to the top of the viscometer until the solution has risen to a level above the top scratch on the viscometer. The vacuum is removed and the solution is allowed to fall. The flow of the solution between the scratch above the bulb and the scratch below the bulb is timed. This flow time measurement is repeated until three values which check within ±0.3 second are obtained. The flow time of the pure solvent is also measured at 130°C in the same way.

The inherent viscosity is calculated using the following equations:

$$\text{Relative Viscosity} = \frac{\text{Time of solution flow}}{\text{Time of solvent flow}}$$

$$\text{Inherent Viscosity} = \frac{\text{natural log of relative viscosity}}{\text{w/v\% polymer concentration}}$$

The finely divided solid fillers which are useful in the filled ethylene polymer are known materials and are discussed in detail in the aforesaid patents disclosing the preparative aspects of filled ethylene polymers. Preferably, the inorganic compound filler should have a neutral to acidic surface and should have interacted at its surface a catalytically active transition metal compound which is substantially free of halogen bonded to the transition metal to provide about 0.000001 to about 1.7 milligram-atom of transition metal per gram of filler. The inorganic compound, the preferred filler, can be coated with an acidic oxide to provide an acidic surface. Preferred inorganic compounds include the alumina hydrates, silicas, water-insoluble silicates, calcium carbonate and basic aluminum-sodium carbonates. The preferred transition metal is selected from the group consisting of titanium, zirconium and chromium.

Acrylic polymers which are useful as the filler are selected from polyacrylonitrile and copolymers of acrylonitrile and not more than about 15%, by weight, of polymeric repeat units of one or more polymerizable ethylenically unsaturated comonomers.

Suitable crystalline and partially crystalline forms of conductive carbon which are useful as the filler include graphite and carbon black, respectively. Graphite can be obtained in its naturally occurring form or it can be obtained by heating coal in an electric furnace. Conductive carbon blacks also can be obtained by the incomplete combustion of hydrocarbon vapors; those prepared by such a process include the acetylene blacks, the channel blacks and, most importantly, the furnace blacks.

Generally, when using a filled ethylene polymer, the composite of this invention, in particulate form, can be prepared by adding to a hydrocarbon solution of the latent heat storage material the appropriate amount of filled ethylene polymer, that is, 30—55% of latent heat material and 45—70% of filled ethylene polymer. The solvent is then removed, for example, evaporated, and the resulting powder is recovered. The solvent should be one in which the organic latent heat material is soluble, and it should be readily removable, for example, by evaporation. Suitable solvents include hydrocarbons, such as pentane and hexane, and the chlorinated hydrocarbons, such as methylene chloride, chloroform and carbon tetrachloride.

The composite, in particulate form, can also be prepared by direct imbibition of the organic latent heat material into the filled ethylene polymer. In this method the polymer is added to a container containing molten organic latent heat material. The temperature is below that at which the filled polymer becomes tacky.

The composite, in particulate form, can also be prepared by adding the organic latent heat material directly to the reaction mixture used in the preparation of the filled ethylene polymer. The organic material can itself serve as the solvent for the polymerization reaction, or it can be a component of the polymerization solvent. The polymerization must be carried out at a temperature above the melting point of the organic material but below the temperature at which the filled polymer product becomes tacky.

When using polyalkene and finely divided solid, the composite of this invention can be prepared by three general procedures. In the first procedure a solution of organic latent heat material, for example, paraffin wax in any solvent that dissolves a reasonable amount of the organic latent heat material, but preferably with a solubility of at least 5% w/w, is slurried with a mixture of finely divided solid and finely divided polyalkene. The solvent is removed and the resultant powder is pressed in an appropriate mold to give the desired shape. Preferably, the mold is heated above the melting point of the polyalkene since, in this case, it is not as critical that the polyalkene be finely divided. In the second procedure, molten organic latent heat material, for example, paraffin wax, is added to the finely divided solid and the resultant mixture is then melt blended with a polyalkene. In the third procedure, a finely divided solid, polyalkene and an organic latent heat material, for example, paraffin wax, are melt blended together. The solid products recovered after carrying out the last two procedures can be remelted and pressed into the desired shape. Alternatively, the solid products can be ground and the resulting powder can be pressed into the desired shape, optionally being heated above the melting point of the polyalkene. As a further alternative, the products can be extruded into the desired shape.

The composite composition, in particulate form, is free-flowing. Typically, the average particle size is in the range of about 0.003—5 mm; aggregates of such particles may be present. When a filled ethylene polymer has been used, the organic latent heat material is contained within each filled ethylene polymer particle and is substantially retained by the particle even when heated above the melting point of the organic latent heat material.

The composite, as a free-flowing powder, can be formed into various shaped heat storage elements, for example, bricks, pipes and blocks with channels for fluid flow; these shaped elements have good mechanical properties. It has been confirmed experimentally that the latent heat capacity of the heat storage element is directly proportional to the amount of latent heat material present; the filled ethylene polymer does not affect the latent heat capacity. Therefore, it is desirable for the heat storage element to contain as much latent heat material as possible, subject to the condition that the latent heat material is substantially contained and retained within the formed heat storage element even when heated above the melting temperature of the latent heat material. In order to best achieve this feature, the preferred heat storage elements of the invention contain 30—40% of organic latent heat material. Especially preferred are heat storage elements containing about 35% of organic latent heat material. A preferred heat storage element is free from any substantial effluence of latent heat material, that is, effluence is less than about 15% of the total amount of latent heat material contained in the composite upon temperature cycling of the article through a temperature range which includes the latent heat of fusion transition, that is, the melting temperature, of the latent heat material.

The heat storage element can be made by compressing the composite powder of the invention in a mold at a pressure of from about 500 psi to about 60,000 psi (about 3450 kPa to about 414,000 kPa), and at a temperature above −40°C but below that of any solid-liquid transition of the latent heat material.

The heat storage element can also be prepared by first pressing the filled ethylene polymer into the desired shape of the heat storage element at a pressure of from about 500 psi to about 60,000 psi (about 3450 kPa to about 414,000 kPa) and a temperature below the softening point of the polymer. The composite heat storage element is then prepared by inhibition of the organic latent heat material by the shaped filled ethylene polymer. The shaped article is placed in molten organic latent heat material in a vacuum flask and the flask evacuated to remove most of the air. The vacuum is then broken and the atmospheric pressure forces the molten organic latent heat material into the shaped article.

The heat storage elements can be prepared in various shapes which are especially useful in a thermal energy storage apparatus and these shaped elements have surprisingly high mechanical strength. For example, they can be prepared in the form of pipes so that the heat exchange fluid can be passed directly through them. Alternatively, they can be prepared with flow channels for passing a fluid of temperature above that of the latent heat transition and with flow channels for passing a fluid of temperature below that of the latent heat transition, said fluids making good thermal contact, either directly or by means of a metallic conductor, with the heat storage material. Other useful forms will be obvious to those skilled in the art.

The following examples are intended to illustrate but not limit the invention. Unless otherwise noted, all parts and percentages are by weight and all temperatures are in degrees Celsius.

Example 1

A. Alumina-filled polyethylene (70% $Al_2O_3 3H_2O$/30% ultrahigh-molecular weight polyethylene) powder was prepared using substantially the procedural details described in Example 2 of U.S. Patent 4,187,210. To a solution of 42.86 g of paraffin wax, m.p. 52—54°, in 300 mL of pentane was added 100 g of the alumina-filled polyethylene powder. The slurry was concentrated on a rotary evaporator using a steam bath as a heat source and an aspirator for a vacuum. The powder was further dried using a vacuum pump operating at 1.33 Pa for 12 hours to give 142 g of a freely-flowing powder product. The composite particulate product was comprised of approximately 30% paraffin wax and approximately 70% filled polyethylene.

B. 15.8811 grams of the product of Part A was pressed in a Carver press at 6000 psi (41,400 kPa) for 3 minutes at room temperature to yield a pellet having a density of 1.2815 at 23°. This demonstrates that the particulate composite of this invention can be formed into shapes which may be useful as heat storage elements.

Example 2

A. A filled ethylene polymer containing 43% Optiwhite® calcined clay and 57% polyethylene was prepared using substantially the procedural details of Example 46 of U.S. Patent 4,187,210. To a solution of 1602 g of paraffin wax in 5 L of hexane was added 2975 g of the clay-filled polyethylene. The slurry was concentrated on a rotary evaporator using a steam bath as a heat source and dried for 14 hours in a vacuum to give 4577 g of a freely-flowing product powder comprised of 35% paraffin wax and 65% filled polyethylene.

B. 3865 Grams of the particulate composite of Part A was pressed at 6,000 psi (41,400 kPa) at 20° in a 10 inch×10 inch (25.4 cm×25.4 cm) press and resulted in a pressed slab 10 inches×10 inches×2 inches (25.4 cm×25.4 cm×5.08 cm). The slab was painted black on one surface and mounted into a Tedlar® polyvinyl fluoride film-covered box, insulated on the rear side, and provided with thermocouples for measuring and recording time vs. temperature of the slab. A slab of concrete of similar dimensions painted black on one side was used as a control. Sunlight was used to irradiate the painted black surfaces. After irradiation by sunlight for 5 hours the slabs were shielded from sunlight by a cover. The concrete control slab returned from a peak of 72° to ambient temperature in 45 minutes. The composite slab reached a peak of 60° and during cooling remained at 52° for 9 hours, then gradually returned to ambient temperature over the next 7 hours.

The composite slab was subjected to solar radiation for over one year without visibly-noticeable deterioration. These results demonstrate that the latent storage material may be used in a Trombe wall configuration to receive and store solar energy.

Example 3

This example demonstrates the making of the composite of the invention by adding the organic latent heat material directly to the reaction mixture in which the filled polyethylene is prepared.

6

Molten paraffin wax (500 mL), m.p. 52°, was passed through a bed or Woelm acidic alumina while purging the apparatus with nitrogen gas. Tetrabenzylzirconium (0.4 mmol) and triisobutylaluminum (7.0 mmol) were added to the wax. Alcoa C333 alumina (50 g), $Al_2O_3$ $3H_2O$, was dried for 18 hours under a nitrogen purge at 170°, then added to the molten paraffin wax and reacted for 4.5 hours with ethylene gas at 65° and 200 psi (1400 kPa) to form polyethylene. The alumina took up 33 g of ethylene. The contents of the reactor were removed, 200 mg of Irganox® 1010 (pentaerythritol ester of 3,5-di-tert-butyl-4-hydroxyphenylacetic acid manufactured by Ciba Geigy) antioxidant was added, and the mixture was filtered while hot to give 105 g of a mineral-supported polyethylene paraffin composite containing 50.8% paraffin wax, 21.2% $Al_2O_3$ $3H_2O$ and 28% polyethylene.

Examples 4—21

Imbibition of the organic latent heat material by a shaped piece of filled ethylene polymer is demonstrated in these examples.

Three batches of filled-polyethylene powders, each containing different fillers, were prepared as follows:

I—70% $Al_2O_3$ $3H_2O$/30% polyethylene substantially by the method of Example 1.

II—50% $Al_2O_3$ $3H_2O$/25% calcined clay/25% polyethylene substantially by the method of Example 2.

III—55% $CaCO_3$/45% polyethylene using substantially the procedural details of Example 50 of U.S. Patent 4,187,210.

A given amount of filled polyethylene was placed in a mold in a Carver press and pressed at a pressure in the range 1000 psi to 6000 psi (6900 kPa to 41,400 kPa) at room temperature for 3 minutes to form a disk 1 square inch (6.4 square cm) in area and about 1/8 inch (3.2 mm) thick. The disk was placed in a vacuum flask along with 20 g of either paraffin wax. m.p. 52—54°, or stearic acid, m.p. 67—69°. The flask was heated on a steam bath, to melt the organic material, and evacuated at 1.33 Pa for 40 minutes. The vacuum was then broken and the disk was allowed to remain in the molten organic material for 10 minutes. The disk was removed, cooled to 25°, and excess organic material was removed form the surface of the disk. The data are summarized in Table I; the last column shows the % latent heat material contained in the disc.

TABLE I

| Example No. | Filled poly-ethylene | Mold pressure (kPa) | Organic latent heat material | % Latent heat material |
|---|---|---|---|---|
| 4 | I | 6,900 | Paraffin | 28.8 |
| 5 | I | 20,700 | " | 18.0 |
| 6 | I | 41,400 | " | 10.8 |
| 7 | II | 6,900 | " | 35.4 |
| 8 | II | 20,700 | " | 19.2 |
| 9 | II | 41,400 | " | 10.7 |
| 10 | III | 6,900 | " | 31.3 |
| 11 | III | 20,700 | " | 18.3 |
| 12 | III | 41,400 | " | 10.0 |
| 13 | I | 6,900 | Stearic Acid | 28.2 |
| 14 | I | 20,700 | " | 14.4 |
| 15 | I | 41,400 | " | 7.7 |
| 16 | II | 6,900 | " | 32.8 |
| 17 | II | 20,700 | " | 19.3 |
| 18 | II | 41,400 | " | 4.8 |
| 19 | III | 6,900 | " | 32.4 |
| 20 | III | 20,700 | " | 16.7 |
| 21 | III | 41,400 | " | 5.8 |

Example 22

A series of latent heat storage materials was prepared by combining 100—50 parts of a composite of 65% $CaCO_3$ and 35% polyethylene, made using substantially the procedural details of Example 50 of U.S. Patent 4,187,210, with 0—50 parts of paraffin wax, following the procedure of Example 1A. Pellets 1 cm in diameter and 1 cm in length were prepared by pressing the resultant material at 41,400 kPa as in Example 1B. The pellets were placed in a heatable press and subjected to a pressure of 20 psi (140 kPa). The temperature was varied as follows: 4 hours to heat from 20° to 95°, 8 hours at 95°, 4 hours to cool from 95° to 20°, and 8 hours at 20°. After a total time of thermal cycling of 1000 hours, there was little loss of paraffin wax at loadings up to 30% (0.4% loss at 20% loading and 1.6% loss at 30% loading). The pellet with 40% paraffin wax showed a loss of paraffin wax of about 11%. The pellets containing 20, 30, and 40% paraffin wax showed a creep crush of 1.20, 5.35 and 16.76 as measured according to ASTM D2990—77. The pellet containing 50% paraffin wax was quite soft; nevertheless, a substantial amount of the paraffin wax was retained within the pellet.

These results demonstrate that the organic latent heat material is substantially contained and retained within the formed element and that the latent heat storage material possesses sufficient strength to be self supporting or to support a load of 140 kPa despite extensive temperature cycling above and below the melting point of the latent heat material.

Examples 23—30

These examples demonstrate the preparation of composites using a mixture of hexane, finely divided (particulate) solid, polyalkene, and organic latent heat material. In each example, 10 g quantities of composite consisting of 4.7 g of mineral, 1.8 g polyalkene, and 3.5 g of paraffin wax (m.p. 52—54°) were

prepared by slurrying the components together in hexane which was heated to a temperature above the melting point of the wax but below the boiling point of the hexane (about 69°); the mineral and polyalkene components are shown in Table II. The hexane was removed at 0.01 mm (1.3 Pa) pressure while heating at 95° for 2 h. The resultant powders were pressed at room temperature (20—25°) into cylindrical pellets at 5,000 psi (35,000 kPa). The pellets from Examples 23, 25, 27 and 29 were then pressed for 5 min at 3,000 psi (21,000 kPa) in a mold that was heated to 160°. The pellets were then cooled to 20—25°. The pellets were weighed and measured. The pellets were then measured for creep crush according to ASTM D 2990—77. The pellets were placed in a heatable press and subjected to a pressure of 20 psi (140 kPa). The press temperature was varied cyclically, 4 h heating from 20° to 95°, 8 h at 95°, 4 h cooling from 95° to 20°, and 8 h at 20°. After 72 h (3 complete cycles) creep crush was measured. The pellets were removed from the press. Any wax which was lost appeared as a solidified meniscus around the base of the cooled pellet. This wax was carefully removed by scraping with a razor blade and the pellet was then weighed to determine the amount of wax lost during the creep crush test. The results appear in Table III. All wax loss was less than 1%. A negative wax loss indicates that the mineral absorbed some water from the air and caused a slight weight gain for the pellet. The % creep was less than 5%. A negative creep crush arises from relaxation of compression produced in the pellet during the preparation of the pellet.

In order to be useful as heat storage elements, these pellets should exhibit creep crush results of less than 20%, preferably less than 3%, and most preferably less than 1%.

Examples 23—30 show that shaped structures of the composite can be made either by cold-pressing the powder or by hot-pressing the powder above the melting temperature of the wax and the polyalkene and that, with either preparation, the composites have substantially the same good mechanical properties.

TABLE II

| Ex. | Mineral | Polyalkene |
|---|---|---|
| 23 | Optiwhite® clay | 1220 Allied LPE* |
| 24 | " | " |
| 25 | Attagel 50 | " |
| 26 | " | " |
| 27 | Optiwhite® clay | Ultrahigh molecular weight linear polyethylene |
| 28 | " | " |
| 29 | Attagel 50 | " |
| 30 | " | " |

*1220 Allied LPE is ultrahigh molecular weight polyethylene with a MW in the range $1—3\times10^6$

TABLE III

| Example | % Wax lost | % Creep |
|---|---|---|
| 23 | 0.04 | 2.515 |
| 24 | 0.22 | 2.199 |
| 25 | 0.25 | 1.343 |
| 26 | −0.30 | −2.721 |
| 27 | 0.39 | 4.129 |
| 28 | 0.23 | 1.005 |
| 29 | −0.69 | 0.979 |
| 30 | −1.34 | −2.716 |

Examples 31—38

Polyalkene pellets were cooled with liquid nitrogen and ground in a Janke and Kunkel grinder to yield a fine powder. The composites were prepared by slurrying together in hexane heated to a temperature above the melting point of the wax but below the boiling point of the hexane; 3.5 g of paraffin wax (melting point 52—54°), 1.8 g of polyalkene powder, and 4.7 g of mineral. The hexane was removed at 0.01 mm (1.3 Pa) pressure while heating at 95° for 2 h. The specific polyalkenes and minerals used are shown in Table IV. For each example the resulting powder was ground to approximately 10 µm and a cylindrical pellet was pressed at 10,000 psi (69,000 KPa). The pellets of Examples 32, 34, 36 and 38 were heated to 165° and hot-pressed at that temperature at a pressure of 1,500 psi (10,000 KPa). Creep crush testing and determination of % wax loss after creep crush were done for each sample as described for Examples 23—30; the results are shown in Table IV. Example 31 is considered outside the invention. % Wax loss could not be determined because the sample was crushed and the particulate could not be recovered and weighed accurately. Although not wishing to be bound by this explanation, it is believed that the experiment failed because the polyalkene was not sufficiently finely divided and admixed with the mineral, as is necessary when the pellets are prepared by cold pressing.

TABLE IV

| Ex. | Polyalkene* | Mineral | % Creep crush | % Wax loss |
|-----|-------------|---------|---------------|------------|
| 31 | HB 301 | Satintone #1 | 50.17 | — |
| 32 | " | " | 4.82 | −0.18 |
| 33 | " | Attagel 50 | −4.15 | −0.36 |
| 34 | " | " | 1.53 | 6.07 |
| 35 | 1900 | Satintone #1 | −1.16 | 0.12 |
| 36 | " | " | 13.53 | 0.06 |
| 37 | " | Attagel 50 | −3.05 | −0.71 |
| 38 | " | " | 1.60 | −0.74 |

*Both polyalkenes used are high molecular weight polyethylenes; HB 301 is Hercules HB 301 polyethylene resin (MW=1.5×10⁶); 1900 is Hercules 1900 polyethylene resin (MW=5×10⁶)

Examples 39—42

These examples demonstrate the preparation of composites by melt blending the components, and the use of polyethylenes of different densities. In each example, 109.5 g of paraffin wax, 131.5 g of mineral and 72 g of polyethylene were blended at 160°, first in a Readco Mixer and then in a two-roll rubber mill. Each sample had 0.3 g of Irganox® 1010 antioxidant (pentaerythitol ester of 3,5-di-tert-butyl-4-hydroxyphenylacetic acid manufactured by Ciba Geigy) added to it during melt mixing. The recovered materials were ground using a Janke and Kunkel grinder cooled with liquid nitrogen to give a powder (about 10 µm particle size). Cylindrical pellets were prepared by pressing the powder at 10,000 psi (69,000) kPa in a mold heated to 180°. The pellets were weighed and tested for creep crush as in Examples 23—30. The results after 72 h of creep crush testing are shown in Table V, along with a description of the minerals and polyethylenes used. The free radical stabilizer is not detrimental to the mechanical properties of the resulting product.

TABLE V

| Ex. | Mineral | Polyethylene (Aldrich) | % Creep crush | % Wax loss |
|-----|---------|------------------------|---------------|------------|
| 39 | Attagel 50 | low density PE | 6.71 | 6.3 |
| 40 | " | high density PE | 1.76 | 3.1 |
| 41 | Satintone #1 | low density PE | 3.24 | 4.0 |
| 42 | " | high density PE | 1.50 | 4.2 |

Examples 43—46

These examples demonstrate the use of polyethylene and isotactic polypropylene of intermediate melt flow and the use of a combination of charcoal and Satintone #1 as the mineral. For each example, 317.8 g of paraffin wax was melt blended with the quantities of mineral and polymer shown in Table VI, using substantially the same procedure described in Examples 39—42. In each example, the recovered powder was pressed into a cylindrical pellet in an evacuated mold and heated to 200° for 30 min, cooled and examined for creep crush and wax loss as in Examples 23—30. The results are given in Table VI.

TABLE VI

| Ex. | Mineral (g) | Polyalkene (g) | % Creep crush | % Wax loss |
|---|---|---|---|---|
| 43 | Satintone #1 (426.7) | Du Pont Alathon® 7030* (163.5) | 2.28 | 6.2 |
| 44 | Satintone #1 (499.4) | Du Pont Alathon® 7030* (90.8) | 2.42 | 1.3 |
| 45 | Satintone #1 (372.3)/ Charcoal (54.5) | Du Pont Alathon® 7030* (163.5) | 1.39 | 3.1 |
| 46 | Satintone #1 (426.7) | Hercules Profax® 6523** (163.5) | 0.95 | less than 0.5 |

*Du Pont Alathon® 7030, low density polyethylene resin.
**Hercules® 6523 polypropylene resin.

Examples 47—51

These examples demonstrate the effect of varying the amount of paraffin wax on % creep crush, % wax loss on thermal cycling and latent heat capacity. The amounts of materials used are shown in Table VII; Satintone #1 was used as the mineral and the polyalkene used was Aldrich isotactic polypropylene. The paraffin wax (mp 52—54°) was weighed into a 1 L beaker and then melted on a steam bath. The polypropylene pellets were added, followed by the mineral. The mixture was well stirred, cooled, and melt blended on a two-roll blender at 185°. The mixture was then cooled with liquid nitrogen and ground at 20,000 rpm in a Janke and Kunkel grinder to yield a fine powder. The powder from each example was pressed at 100,000 psi (690,000 KPa) for 20 min at 25° into a cylindrical pellet. The pellets were subjected to a 72 h creep crush test as in Examples 23—30. The results are shown in Table VII. All pellets had a wax loss of less than 0.1%. The latent heat was measured for two heating and cooling cycles and the average latent heats given in Table VII are, therefore, the average of 4 determinations.

TABLE VII

| Ex. | Paraffin wax (g) | Mineral (g) | Polyalkene (g) | % Creep crush | Avg. latent heat (cal/g) |
|---|---|---|---|---|---|
| 47 | 20 | 144 | 36 | 0.22 | 4.7 |
| 48 | 40 | 124 | " | 0.56 | 9.5 |
| 49 | 60 | 104 | " | 1.48 | 13.6 |
| 50 | 70 | 94 | " | 0.06 | 18.6 |
| 51 | 80 | 84 | " | 3.55 | 20.6 |

Examples 52—56

Examples 47—51 were repeated using Hercules Profax® 6523 polypropylene in place of Aldrich isotactic polypropylene. The compositions of the composites are shown in Table VIII. The pellets were

11

examined for creep crush properties (shown in Table VIII) and wax loss. All had wax losses of less than 0.1%. The latent heat was measured for two heating and cooling cycles and the average latent heats given in Table VIII are, therefore, the average of 4 determinations.

TABLE VIII

| Ex. | Paraffin wax (g) | Polyalkene (g) | Mineral (g) | % Creep crush | Avg. latent heat (cal/g) |
|---|---|---|---|---|---|
| 52 | 10 | 18 | 72 | −1.34 | 3.0 |
| 53 | 20 | " | 62 | −0.39 | 8.6 |
| 54 | 30 | " | 52 | −1.32 | 13.6 |
| 55 | 35 | " | 47 | 0.26 | 13.9 |
| 56 | 40 | " | 42 | 1.00 | 18.0 |

Example 57

This example demonstrates the sensible and latent heat storage by a melt blended composite and demonstrates a utility for the material, namely, heating water.

A 151.87 g sample of composite prepared according to the procedure described in Example 53 was pressed in an unheated (25°) mold at 10,000 psi (69,000 KPa) to form a disk 2″ dia.×1″ thick (5.08 cm dia.×2.54 cm thick). The disk was heated in a water bath to 95.1° for 1 h. A Dewar flask containing 372.49 g of water was thermally preequilibrated at 32.8°. The warm disk was removed from the water bath and transferred to the Dewar together with 16.73 g of water, also at 95.1°. Five minutes later the temperature of the water in the Dewar was 41.2°. The bomb constant for the Dewar was previously found to be 95.38 cal/°. From these measurements and the known composition of the composite. A sensible heat capacity of 0.272 cal/g° was determined. This compares with a calculated heat capacity of 0.276 cal/g° for a composite containing 62% Satintone #1, clay, 18% polypropylene, and 20% paraffin wax having sensible heat capacities of 0.179 cal/g°, 0.44 cal/g° and 0.43 cal/g°, respectively, together with a latent heat capacity of 52 cal/g for the paraffin wax.

Experiments 1 and 2

These showings demonstrate the failure of composites prepared from paraffin wax and high molecular weight polyethylene when the finely divided solid is omitted. The composites were prepared using the hexane slurry technique as in Examples 23—30, except that in each experiment 3.5 g of paraffin wax and 6.5 g of high molecular weight polyethylene were used. Hercules HB 301 polyethylene was used in Experiment 1 and Hercules 1900 polyethylene was used in Experiment 2. The hexane slurry was evaporated at 0.02 mm (2.7 Pa) for 2 h at 20° and the recovered powder was pressed into cylindrical pellets at 10,000 psi (69,000 KPa). The pellets, tested for creep crush as in Examples 23—30, were completely crushed.

Experiments 3 to 6

These experiments demonstrate the use of isotactic polypropylene and various amounts of paraffin wax without the finely divided solid. Hercules Profax® 7523 was ground to about a 10 μm particle size using a Janke and Kunkel liquid nitrogen cooled grinder. The resultant powder was slurried with a hexane solution of paraffin wax. The hexane was removed as in the examples and a cylindrical pellet from the powder recovered from each experiment was pressed at 10,000 psi (69,000 KPa) at 20° for 5 min. The compositions are shown in Table IX. The pellets of Experiments 4 and 6 were placed in a mold, heated to 200°, and hot-pressed at 800 psi (5,500 KPa) for 4 min. The polymer appeared to be fused in these two pellets. The results of creep crush tests and the % wax loss are shown in Table IX. The materials of Experiments 4 and 6 would not be suitable for heating storage elements because the heat conductivities are too low.

TABLE IX

| Expt. | Paraffin wax (g) | Polyalkene (g) | % Creep crush | % Wax loss |
|---|---|---|---|---|
| 3 | 3.5 | 6.5 | Crushed | — |
| 4 | 3.5 | 6.5 | 2.54 | 1.3 |
| 5 | 4.5 | 5.5 | Crushed | — |
| 6 | 4.5 | 5.5 | 17.99 | 0.4 |

Experiments 7—9

Example 47 was repeated except that the amount of Satintone #1 was 164 g and no paraffin wax was added. The % creep crush was 0.51 and the average latent heat was 0.

Example 52 was repeated except that the amount of Satintone #1 and 82 g and no paraffin wax was added. The % creep crush was −0.01 and the average latent heat was 0.

Example 52 was repeated except that the amount of paraffin wax was 100 g and no mineral or polyalkene was added. Creep crush could not be determined because the wax melts under the test and the average latent heat was 51.2.

The following experiments were carried out to show that certain prior art composites do not exhibit the desirable features of the composites of the invention. Percentages are by weight and temperatures are in degrees Celsius.

Experiment 10

Two disks, one of polyethylene and one of polyacrylonitrile, were formed by pressing 325 mesh (U.S. Sieve Series) polyethylene powder and polyacrylonitrile powder, respectively, at 6000 psi (41,400 kPa) at room temperature for 2 minutes. Each disk was made to imbibe 35% by weight of paraffin wax in a manner analogous to that described in Examples 4—21. The polyethylene/paraffin wax disk became very soft above 50°. The polyacrylonitrile/paraffin wax composite was very brittle and cracked easily at room temperature and crumbled at 50°. These results show the necessity for using the highly-filled ethylene polymers to obtain the mechanical properties of the shaped composites of this invention.

Experiment 11

The following materials were used:
a) lignite—"Alcoa" Texas Lignite, sieved 100-mesh (U.S. Sieve Series), black powder
b) hard coal—"R & F" Pittsburgh 8 coal, 200-mesh (U.S. Sieve Series), fine black powder
c) coke breeze—Phoenix Steel Corp., sieved 10-mesh (U.S. Sieve Series)
d) charcoal—Darco G-60, Fisher Chemical Co.

Each of these materials, in turn, was impregnated with 30% paraffin wax, using the method of Example 1, and then pressed into a pellet. The pellets were heated for one hour at 90° and then subjected to a load of 20 psi (140 kPa). The pellets prepared from either lignite or hard coal were crushed and collapsed under this load. The pellets prepared from charcoal contained many cracks. The pellets containing coke crumbled at a paraffin wax content of 3% and could not be made to contain 30% paraffin wax.

A control pellet comprised of 65% alumina/polyethylene and 35% paraffin wax, as made in Example 1, showed no changes under such loading; such a pellet can withstand pressures well in excess of 20 psi (140 kPa).

Best mode for carrying out the invention

The best mode presently contemplated for carrying out the invention using filled ethylene polymer is represented by those embodiments wherein the filled ethylene polymer consists of polyethylene filled with alumina and the organic latent heat material is paraffin wax. The best mode presently contemplated for carrying out the invention using polyalkene and finely divided solid is represented by Examples 47 to 56.

Industrial applicability

The industrial applicability of heat sink/heat source composites is well known and is adequately discussed in the background section of this specification. The composites of this invention provide an improvement over the art.

**Claims**

1. Composite consisting essentially of, by weight, with the total being 100%:
(a) about 30—55% of an organic latent heat material having at least one latent heat transition, as a solid-solid transition(s) and/or a solid-liquid transition, in the temperature range 0—100°C, and which, when liquid, wets the surface of either the filled ethylene polymer (b)(i) or the finely divided (particulate) solid and polyalkene of (b)(ii); and

(b) about 45—70% of either;

(i) a filled ethylene polymer consisting of ethylene polymer and finely divided (particulate) solid filler, substantially all of the ethylene polymer being deposited on the surface of the finely divided filler and substantially all of the filler having ethylene polymer deposited on its surface, or

(ii) a polyalkene having a weight average molecular weight of at least 10,000 and a finely divided (particulate) solid such as a mineral, an organic material such as a polymer, a metal or a mixture thereof, said solid having a melting point above and being substantially insoluble in the organic latent heat material of (a) and the polyalkene, the polyalkene being at least 5% by weight and the finely divided (particulate) solid being at least 15% by weight of the combined weights of organic latent heat·material, polyalkene and finely divided (particulate) solid.

2. Composite of Claim 1 wherein the filler or finely divided solid is an inorganic compound.

3. Composite of Claim 1 or 2 wherein the ethylene polymer or polyalkene is polyethylene and the organic latent heat material is an alkane or an alkanoic acid.

4. Composite of Claim 1, 2 or 3, wherein the organic latent heat material is paraffin wax.

5. Composite of any one of Claims 1 to 4 wherein the filled ethylene polymer consists essentially of, by weight:

(a) about 10—70% of an ethylene polymer having an $\eta_{inh}$ of at least about 1 and selected from polyethylene and copolymers of ethylene and up to about 15%, by weight, of one or more polymerizable olefinic hydrocarbons of 3—10 carbon atoms; and

(b) about 30—90% of finely divided (particulate) solid filler.

6. Composite of any one of Claims 1 to 5 wherein the filler is selected from

(a) an inorganic compound having a neutral to acidic surface and having interacted at its surface sufficient catalytically active transition metal compound substantially free of halogen bonded to transition metal to provide 0.000001—1.7 milligram-atom of transition metal per gram of filler;

(b) an acrylic polymer selected from polyacrylonitrile and copolymers of acrylonitrile and not more than about 15%, by weight, of one or more polymerizable ethylenically unsaturated comonomers; and

(c) conductive carbon.

7. Composite of any one of Claims 1 to 6 consisting essentially of 30—40% of organic latent heat material and 60—70% of filled ethylene polymer.

8. Composite of any one of Claims 1 to 7 wherein the filled ethylene polymer consists essentially of about 20—55% of ethylene polymer having an $\eta_{inh}$ of at least about 2 and about 45—80% of filler.

9. Composite of any one of Claims 1 to 8 wherein the ethylene polymer has an $\eta_{inh}$ of at least about 8.

10. Composite of any one of Claims 1 to 9 wherein the ethylene polymer is polyethylene and the latent heat material is an alkane or an alkanoic acid.

11. Composite of Claim 10 wherein the latent heat material is paraffin wax.

12. Composite of Claim 10 wherein the latent heat material is stearic acid.

13. Composite of any one of Claims 1 to 12 wherein the filler is an inorganic compound.

14. Composite of any one of Claims 1 to 13 wherein the finely divided (particulate) solid is selected from a mineral, a polymer, a metal and mixtures thereof.

15. Composite of any one of Claims 1 to 14 consisting essentially of 30—40% of organic latent heat material, 15—25% of polyalkene and 35—55% of finely divided (particulate) solid.

16. Composite of Claim 15 wherein the amount of organic latent heat material is about 35%.

17. Composite of any one of Claims 1 to 16 wherein the organic latent heat material is stearic acid.

18. Composite of any one of Claim 1 to 17 wherein the size of the finely divided solid is in the range 1 μm to 2 mm.

19. Composite of any one of Claims 1 to 18 in the form of compressed pellets exhibiting a creep crush according to ASTM D 2990—77 of less than 20%.

20. Composite of Claim 19 wherein the creep crush is less than 3%.

21. Composite of any one of Claims 1 to 20 wherein the molecular weight of the polyalkene is at least 100,000.

22. Pressure-molded shaped article of the composite of any one of Claims 1 to 21.

23. Heat storage element of the composite of any one of Claims 1 to 21.

**Patentansprüche**

1. Verbundstoff, bestehend im wesentlichen aus, bezogen auf das Gewicht, wobei die Gesamtsumme 100% beträgt,

(a) etwa 30 bis 55% eines organischen, latente Wärme enthaltenden Materials mit wenigstens einem latenten Wärme-Übergang als einem Übergang (mehreren Übergängen) Fest-Fest und/oder einem Übergang Fest-Flüssig in dem Temperaturbereich von 0°C bis 100°C, das im Flüssigen Zustand die Oberfläche entweder des gefüllten Ethylen-Polymers (b)(i) oder des fein zerteilten (teilchenförmigen) Feststoffs und Polyalkylens (b)(ii) benetzt, und

(b) etwa 45 bis 70% entweder

(i) eines gefüllten Ethylen-Polymers, bestehend aus einem Ethylen-Polymer und einem fein zerteilten (teilchenförmigen) festen Füllstoff, wobei im wesentlichen die Gesamtmenge des Ethylen-Polymers auf der Oberfläche des feinteiligen Füllstoffs niedergeschlagen ist und im wesentlichen die Gesamtmenge des feinteiligen Füllstoffs Ethylen-Polymer niedergeschlagen auf seiner Oberfläche aufweist, oder

(ii) eines Polyalkens mit einem Gewichtsmittel des Molekulargewichts von wenigstens 10 000 und eines fein zerteilten (teilchenförmigen) Feststoffs, etwa eines Minerals, eines organischen Feststoffs wie eines Polymers, eines Metalls oder einer Mischung aus diesen, wobei der Feststoff einen Schmelzpunkt hat, der oberhalb desjenigen des organischen, latente Wärme enthaltenden Materials aus (a) liegt, und im wesentlichen in diesem sowie in dem Polyalken unlöslich ist, wobei das Polyalken wenigstens 5 Gew.-% und der fein zerteilte (teilchenförmige) Feststoff wenigstens 15 Gew.-% der kombinierten Gewichte von organischem, latente Wärme enthaltenden Material, Polyalkylen und fein zerteilten (teilchenförmigen) Feststoff ausmachen.

2. Verbundstoff nach Anspruch 1, worin der Füllstoff oder feinteilige Feststoff eine anorganische Verbindung ist.

3. Verbundstoff nach Anspruch 1 oder 2, worin das Ethylen-Polymer oder Polyalken Polyethylen ist und das organische, latente Wärme enthaltende Material ein Alkan oder eine Alkansäure ist.

4. Verbundstoff nach Anspruch 1, 2 oder 3, worin das organische, latente Wärme enthaltende Material ein Parafinwachs ist.

5. Verbundstoff nach irgendeinem der Ansprüche 1 bis 4, worin das gefüllte Ethylen-Polymer im wesentlichen besteht aus, bezogen auf das Gewicht,

(a) etwa 10 bis 70% eines Ethylen-Polymers mit einem $\eta_{inh}$ von wenigstens etwa 1 und ausgewählt aus Polyethylen und Copolymeren von Ethylen und bis zu etwa 15 Gew.-% eines oder mehrerer polymerisierbarer olefinischer Kohlenwasserstoffe mit 3 bis 10 Kohlenstoff-Atomen und

(b) etwa 30 bis 90% des fein zerteilten (teilchen-förmigen) festen Füllstoffs.

6. Verbundstoff nach irgendeinem der Ansprüche 1 bis 5, worin der Füllstoff ausgewählt ist aus

(a) einer anorganischen Verbindung mit einer neutralen bis sauren Oberfläche, wobei mit dieser Verbindung an ihrer Oberfläche eine ausreichende Menge einer katalytisch aktiven Übergangsmetallverbindung, die im wesentlichen frei von an das Übergangsmetall gebundenem Halogen ist, in Wechselwirkung getreten ist, um 0,000001 bis 1,7 Milligramm-Atom des Übergangsmetalls pro Gramm Füllstoff bereitzustellen;

(b) einem Acryl-Polymer, ausgewählt aus Polyacrylnitril und Copolymeren von Acrylnitril und nicht mehr als 15 Gew.-% eines oder mehrerer polymerisierbarer, ethylenisch ungesättigter Comonomerer; und

(c) leitfähigem Kohlenstoff.

7. Verbundstoff nach irgendeinem der Ansprüche 1 bis 6, im wesentlichen bestehend aus 30 bis 40% des organischen, latente Wärme enthaltende Materials und 60 bis 70 Gew.-% des gefüllten Ethylen-Polymers.

8. Verbundstoff nach irgendeinem der Ansprüche 1 bis 7, worin das gefüllte Ethylen-Polymer im wesentlichen besteht aus etwa 20 bis 55% eines Ethylen-Polymers mit einem $\eta_{inh}$ von wenigstens etwa 2 und etwa 45 bis 80 Gew.-% Füllstoff.

9. Verbundstoff nach irgendeinem der Ansprüche 1 bis 8, worin das Ethylen-Polymer ein $\eta_{inh}$ von wenigstens etwa 8 besitzt.

10. Verbundstoff nach irgendeinem der Ansprüche 1 bis 9, worin das Ethylen-Polymer Polyethylen ist und das organische, latente Wärme enthaltende Material ein Alkan oder eine Alkansäure ist.

11. Verbundstoff nach Anspruch 10, worin das organische, latente Wärme enthaltende Material ein Paraffinwachs ist.

12. Verbundstoff nach Anspruch 10, worin das organische, latente Wärme enthaltende Material Stearinsäure ist.

13. Verbundstoff nach irgendeinem der Ansprüche 1 bis 12, worin der Füllstoff eine anorganische Verbindung ist.

14. Verbundstoff nach irgendeinem der Ansprüche 1 bis 13, worin der fein zerteilte (teilchenförmige) Feststoff aus einem Mineral, einem Polymer, einem Metall und deren Mischungen ausgewählt ist.

15. Verbundstoff nach irgendeinem der Ansprüche 1 bis 14, im wesentlichen bestehend aus 30 bis 40% des organischen, latente Wärme enthaltenden Materials, 15 bis 25% Polyalken und 35 bis 55% des fein zerteilten (teilchenförmigen) Feststoffs.

16. Verbundstoff nach Anspruch 15, worin die Menge des organischen, latente Wärme enthaltenden Materials etwa 35% beträgt.

17. Verbundstoff nach irgendeinem der Ansprüche 1 bis 16, worin das organische, latente Wärme enthaltende Material Stearinsäure ist.

18. Verbundstoff nach irgendeinem der Ansprüche 1 bis 17, worin der feinteilige Feststoff im Bereich von 1 µm bis 2 mm liegt.

19. Verbundstoff nach irgendeinem der Ansprüche 1 bis 18 in Form komprimierter Pellets mit einem Kriechbruch gemäß ASTM D 2990—77 von weniger als 20%.

20. Verbundstoff nach Anspruch 19, worin der Kriechbruch weniger als 3% beträgt.

21. Verbundstoff nach irgendeinem der Ansprüche 1 bis 20, worin das Molekulargewicht des Polyalkens wenigstens 100 000 beträgt.

22. Druckgeformter Gegenstand aus dem Verbundstoff nach irgendeinem der Ansprüche 1 bis 21.

23. Wärmespeicherelement aus dem Verbundstoff nach irgendeinem der Ansprüche 1 bis 21.

## Revendications

1. Composite essentiellement constitué, en poids, pour un total de 100%, de:

(a) environ 30 à 55% d'une matière organique à chaleur latente présentant au moins une transition à chaleur latente, consistant en une ou plusieurs transitions solide-solide et/ou une transition solide-liquide, dans l'intervalle de température de 0 à 100°C, et qui, à l'état liquide, mouille la surface soit du polymère d'éthylène chargé (b)(i), soit du solide finement divisé (particulaire) et du polyalcène de (b)(ii); et

(b) environ 45 à 70% de l'un ou l'autre de:

(i) un polymère d'éthylène chargé constitué d'un polymère d'éthylène et d'une charge solide finement divisée (particulaire), pratiquement tout le polymère d'éthylène étant déposé sur la surface de la charge finement divisée et pratiquement toute la charge comportant du polymère d'éthylène déposé sur sa surface, et

(ii) un polyalcène ayant un poids moléculaire moyen en poids d'au moins 10 000 et un solide finement divisé (particulaire) tel qu'une substance minérale, une substance organique telle qu'un polymère, un métal ou un mélange d'entre eux, ledit solide ayant un point de fusion supérieur à celui de la matière organique à chaleur latente de (a) et du polyalcène et y étant sensiblement insoluble, le polyalcène représentant au moins 5% en poids et le solide finement divisé (particulaire) représentant au moins 15% en poids de la somme des poids de la matière organique à chaleur latente, du polyalcène et du solide finement divisé (particulaire).

2. Composite de la revendication 1, dans lequel la charge ou le solide finement divisé est un composé minéral.

3. Composite de la revendication 1 ou 2, dans lequel le polymère d'éthylène ou le polyalcène est du polyéthylène et la matière organique à chaleur latente est un alcane ou un acide alcanoïque.

4. Composite de la revendication 1, 2 ou 3, dans lequel la matière organique à chaleur latente est une cire de paraffine.

5. Composite de l'une quelconque des revendications 1 à 4, dans lequel le polymère d'éthylène chargé est essentiellement constitué, en poids, de:

(a) environ 10 à 70% d'un polymère d'éthylène ayant une $\eta_{inh}$ d'au moins environ 1 et choisi parmi le polyéthylène et les copolymères d'éthylène avec jusqu'à 15% en poids environ d'un ou plusieurs hydrocarbures oléfiniques polymérisables de 3 à 10 atomes de carbone; et

(b) environ 30 à 90% de charge solide finement divisée (particulaire).

6. Composite de l'une quelconque des revendications 1 à 5, dans lequel la charge est choisie parmi

(a) un composé minéral ayant une surface neutre à acide et portant, entré en interaction à sa surface, suffisamment d'un composé de métal de transition catalytiquement actif sensiblement exempt d'halogène lié au métal de transition pour fournir 0,000001 à 1,7 milliatome-gramme de métal de transition par gramme de charge;

(b) un polymère acrylique choisi parmi le polyacrylonitrile et les copolymères d'acrylonitrile et d'au plus environ 15% en poids d'un ou plusieurs comonomères éthyléniquement insaturés polymérisables; et

(c) du carbone conducteur.

7. Composition de l'une quelconque des revendications 1 à 6, essentiellement constitué de 30 à 40% de matière organique à chaleur latente et de 60 à 70% de polymère d'éthylène chargé.

8. Composite de l'une quelconque des revendications 1 à 7, dans lequel le polymère d'éthylène chargé est essentiellement constitué d'environ 20 à 55% de polymère d'éthylène ayant une $\eta_{inh}$ d'au moins environ 2 et d'environ 45 à 80% de charge.

9. Composite de l'une quelconque des revendications 1 à 8, dans lequel le polymère d'éthylène a une $\eta_{inh}$ d'au moins environ 8.

10. Composite de l'une quelconque des revendications 1 à 9, dans lequel le polymère d'éthylène est du polyéthylène et la matière à chaleur latente est un alcane ou un acide alcanoïque.

11. Composite de la revendication 10, dans lequel la matière à chaleur latente est une cire de paraffine.

12. Composite de la revendication 10, dans lequel la matière à chaleur latente est l'acide stéarique.

13. Composite de l'une quelconque des revendications 1 à 12, dans lequel la charge est un composé minéral.

14. Composite de l'une quelconque des revendications 1 à 13, dans lequel le solide finement divisé (particulaire) est choisi entre une substance minérale, un polymère, un métal ou un mélange d'entre eux.

15. Composite de l'une quelconque des revendications 1 à 14, essentiellement constitué de 30 à 40% de matière organique à chaleur latente, 15 à 25% de polyalcène et 35 à 55% de solide finement divisé (particulaire).

16. Composite de la revendication 15, dans lequel la quantité de matière organique à chaleur latente est d'environ 35%.

17. Composite de l'une quelconque des revendications 1 à 16, dans lequel la matière organique à chaleur latente est l'acide stéarique.

18. Composite de l'une quelconque des revendications 1 à 17, dans lequel la grosseur du solide finement divisé se situe dans l'intervalle de 1 µm à 2 mm.

19. Composite de l'une quelconque des revendications 1 à 18, sous la forme de pastilles comprimées présentant un écrasement de fluage selon la norme ASTM D 2990—77 inférieur à 20%.

20. Composite de la revendication 19, dans lequel l'écrasement de fluage est inférieur à 3%.

21. Composite de l'une quelconque des revendications 1 à 20, dans lequel le poids moléculaire du polyalcène est d'au moins 100 000.

22. Article façonné moulé par pression constitué du composite de l'une quelconque des revendications 1 à 21.

23. Elément accumulateur de chaleur constitué du composite de l'une quelconque des revendications 1 à 21.